# EUROPEAN PATENT APPLICATION

(11) **EP 2 983 440 A1**
(43) Date of publication of application: **10.02.2016**
(21) Application number: 14306255.2
(22) Date of filing: 07.08.2014
(51) Int. Cl.: H04W 76/02, H04W 72/04

(54) **Device-to-device communication**

(71) Applicant: ALCATEL LUCENT, 92100 Boulogne-Billancourt (FR)
(72) Inventor: Palat, Sudeep, Swindon, Wiltshire SN5 7DJ (GB); Lim, Seau Sian, Swindon, Wiltshire SN5 7DJ (GB); Puddle, Nicola, Swindon, Wiltshire SN5 7DJ (GB)
(74) Representative: Leppard, Andrew John

(57) **Abstract**

A network node method, a network node, a user equipment method, user equipment and computer program products are disclosed. The user equipment method of supporting device-to-device communication within a wireless telecommunications network, comprises: determining a capability of a cell supporting the user equipment to operate with simultaneous device-to-device and cellular communication; and responsive to the determining, selecting a device-to-device communication scheme based on a device-to-device communication capability of the user equipment. In this way, an optimized communication scheme used by the user equipment and network can be selected to best match the capabilities of the user equipment and the base station supporting the cell. This enables the appropriate device-to-device communication scheme to be used for a range of different scenarios.

## Description

### FIELD OF THE INVENTION

The present invention relates to a network node method, a network node, a user equipment method, user equipment and computer program products.

### BACKGROUND

Wireless telecommunications networks are known. In a cellular system, radio coverage is provided to user equipment, for example, mobile telephones, by geographical area. Those geographical areas of radio coverage are known as cells. Abase station is located in each geographical area to provide the required radio coverage and support communication with the user equipment. Abase station may support more than one cell providing coverage in the same geographical area. User equipment in the area served by a base station receives information and data from that base station and transmits information and data to that base station. Information and data transmitted by a base station to user equipment occurs on frequency channels of radio carriers known as downlink carriers. Information and data transmitted by user equipment to a base station occurs on frequency channels of radio carriers known as uplink carriers.

It is known to provide base stations and user equipment within the same network which support differing functionality and which can lead to unexpected consequences. Accordingly, it is desired to provide an improved technique for controlling devices within wireless telecommunications networks.

### SUMMARY

According to a first aspect, there is provided a user equipment method of supporting device-to-device communication within a wireless telecommunications network, comprising: determining a capability of a cell supporting the user equipment to operate with simultaneous device-to-device and cellular communication; and responsive to the determining, selecting a device-to-device communication scheme based on a device-to-device communication capability of the user equipment.

The first aspect recognizes that an emerging functionality in wireless telecommunications network is that of device-to-device proximity services; in particular, providing device-to-device discovery and device-to-device communications for both public safety and non-public safety scenarios. Two types of resource allocation schemes are provided, namely mode 1 and mode 2 resource allocation schemes for device-to-device transmission. Mode 1 is used when a transmitting user equipment is in coverage and requires the transmitting user equipment to request radio resources for every transmission or for a series of transmissions from the network. Mode 2 can be used when a transmitting user equipment is in coverage or out of coverage and the transmitting user equipment autonomously selects from a pool of radio resources (either preconfigured or provided by the network) for every transmission. Such a scheme may lead to more than one user equipment potentially selecting the same radio resources for transmission at the same time. Regardless of the mode 1 or mode 2 allocation scheme, the user equipment monitoring for any transmission is provided with a pool of radio resources. Such a pool is either preconfigured (to be used when out of coverage) or provided by the network (when in coverage or in partial coverage).

Public safety user equipment (i.e. those user equipment operated by a public safety body such as the emergency services) are assumed to be able to simultaneously perform cellular communications on a downlink carrier and device-to-device communications on associated uplink carriers for frequency-division duplexing bands. It is also assumed that there is no simultaneous operation of carrier aggregation and device-to-device communications required for Release 12 device-to-device communication for two downlink carrier aggregation capable user equipment. Given this, the public safety user equipment have a dedicated receiver for device-to-device operation, separate from the receiver used for downlink cellular communications. However, the downlink carrier aggregation capability of a user equipment will be affected by the presence of device-to-device communications, as such communications would need to share the same radio frequency chain as any secondary component carrier. For example, for user equipment capable of only two downlink carrier aggregation, such user equipment will not be able to perform downlink carrier aggregation while receiving device-to-device traffic, as the dedicated receiver is also part of the carrier aggregation capability for the user equipment. For user equipment capable of three downlink carrier aggregation, carrier aggregation is still possible on the downlink, but the carrier aggregation capability is reduced when device-to-device reception operation is ongoing.

Accordingly, time division multiplexing can be used for multiplexing the device-to-device signal and the cellular signal from an individual user equipment perspective (at least within a carrier). Also, frequency division multiplexing shall not be used for multiplexing the device-to-device signal and the cellular signal from an individual user equipment perspective on a given carrier. This provides a further requirement for non-carrier aggregation user equipment. Such user equipment do not perform cellular communications and device-to-device transmission at the same time. The half-duplex operation means that user equipment cannot perform cellular transmissions and device-to-device reception at the same time. Accordingly, user equipment capability for simultaneous device-to-device communications and cellular operation can be summarized as follows:

**Table 1**

| **Cellular** | **D2D** | **Possible?** |
|---|---|---|
| TX | TX | NO (only TDM, no FDM in the same frequency); Same for UL SCell |
| TX | RX | NO (HD within a frequency) YES (if different frequency and dedicated receiver) |
| RX | TX | YES (different carrier & UE is FD) |
| RX | RX | YES (dedicated receiver but affect CA capability) |

Also, from the operator perspective, the following scenarios are possible: the public safety operator may have its own dedicated frequency for device-to-device communications; the public safety operator may use a commercial operator for device-to-device communications, the commercial operator may operate all device-to-device communications in one uplink frequency, or the commercial operator may operate device-to-device communications in multiple uplink frequencies. Accordingly, the first aspect recognizes that techniques are required for handling simultaneous device-to-device and cellular operations for these scenarios, taking into consideration the capability limitations of user equipment.

Accordingly, a method may be provided. The method may be a method performed by user equipment. The method may be for supporting device-to-device communication within a wireless telecommunications network. The method may comprise the step of determining a capability or an ability of a cell supporting or providing coverage to user equipment to operate, function or support both device-to-device communication and cellular communication simultaneously or concurrently. The method may also comprise, in response to the determining, selecting a device-to-device communication scheme based on or in response to a device-to-device communication capability or ability of the user equipment. In this way, an optimized communication scheme used by the user equipment and network can be selected to best match the capabilities of the user equipment and the base station supporting the cell. This enables the appropriate device-to-device communication scheme to be used for a range of different scenarios.

In one embodiment, when it is determined that the cell is incapable of operating with simultaneous device-to-device and cellular communication, the device-to-device communication scheme comprises switching to device-to-device communication when such communication is required by the user equipment. Accordingly, should the cell not support or fail to support simultaneous device-to-device communication and cellular communication, then the user equipment may cease to perform cellular communication and instead switch solely to device-to-device communication. It will be appreciated that a similar scheme may be employed when the user equipment is also incapable of operating with simultaneous device-to-device and cellular communication.

In one embodiment, the switching comprises autonomously releasing a radio resource control connection prior to the device-to-device communication. Accordingly, the user equipment may itself release the radio resource control connection before performing device-to-device communication.

In one embodiment, when it is determined that the cell is incapable of operating with simultaneous device-to-device and cellular communication and the user equipment is capable of operating with simultaneous device-to-device and cellular communication due to carrier aggregation capability, the device-to-device communication scheme comprises allocating logic supporting carrier aggregation communication for device-to-device communication. Accordingly, when the cell is incapable of simultaneous or concurrent device-to-device communication and cellular communication, but the user equipment is and the user equipment also has carrier aggregation functionality, some of the logic supporting that carrier aggregation communication may instead be used for device-to-device communication. It will also be appreciated that this approach is possible when the cell is capable of operating with simultaneous device-to-device and cellular communication.

In one embodiment, the logic comprises at least one of transmission logic and reception logic supporting device-to-device communication using one of a plurality of carriers. Accordingly, transmission and/ or reception logic which would otherwise be used for carrier aggregation may instead be allocated to device-to-device communication. It will also be appreciated that this approach is possible when the cell is capable of operating with simultaneous device-to-device and cellular communication.

In one embodiment, the method comprises providing an indication of the logic allocated for device-to-device communication to a network node of the wireless telecommunications network. Accordingly, the network may be informed that some of the carrier aggregation capability of the user equipment has been removed and instead utilized for device-to-device communication. It will also be appreciated that this approach is possible when the cell is capable of operating with simultaneous device-to-device and cellular communication.

In one embodiment, the providing occurs during an attach of the user equipment.

In one embodiment, when it is determined that the cell is capable of operating with simultaneous device-to-device and cellular communication and the user equipment is incapable of operating with simultaneous device-to-device and cellular communication, the device-to-device communication scheme comprises switching between cellular communication and device-to-device communication using time division multiplexing. Accordingly, when the cell is capable of simultaneous device-to-device communication and cellular communication, but the user equipment is not, the user equipment may switch between performing cellular and device-to-device communication in order to support both.

In one embodiment, the time division multiplexing allocates at least one subframe for device-to-device communication.

In one embodiment, the time division multiplexing allocates the at least one subframe for device-to-device communication on at least one of a frequency carrier used for the cellular communication and a frequency carrier dedicated to device-to-device communication.

In one embodiment, when it is determined that the cell is capable of operating with simultaneous device-to-device and cellular communication and the user equipment is incapable of operating with simultaneous device-to-device and cellular communication, the device-to-device communication scheme comprises performing device-to-device communication on a frequency carrier dedicated to device-to-device communication by the wireless telecommunications network. Accordingly, when the cell is capable of operating with simultaneous device-to-device communication and cellular communication but the user equipment is not, then the device-to-device communication may occur on a separate frequency carrier allocated for such device-to-device communication.

In one embodiment, the performing device-to-device communication on the frequency carrier dedicated to device-to-device communication by the wireless telecommunications network occurs in response to at least one of a handover of the user equipment to the frequency carrier dedicated to device-to-device communication, a release of a radio resource control connection and a release of a carrier for a carrier aggregation capable user equipment.

In one embodiment, the method comprises providing an indication to the wireless telecommunications network that the user equipment is to perform device-to-device communication. Accordingly, the user equipment may indicate to the network when device-to-device communication is to occur.

In one embodiment, the indication is encoded using at least one of a specified RACH preamble, medium access control control element, radio resource control connection request information element, radio resource control connection complete information element and an interest indication.

In one embodiment, the indication indicates at least one of a frequency carrier for device-to-device communication, a device-to-device group of interest and whether the device-to-device communication comprises at least one of transmission and reception.

According to a second aspect, there is provided user equipment operable to support device-to-device communication within a wireless telecommunications network, comprising: determining logic operable to determine a capability of a cell supporting the user equipment to operate with simultaneous device-to-device and cellular communication; and selection logic operable, responsive to the determining logic, to select a device-to-device communication scheme based on a device-to-device communication capability of the user equipment.

In one embodiment, when the determining logic determines that the cell is incapable of operating with simultaneous device-to-device and cellular communication, the device-to-device communication scheme comprises switching to device-to-device communication when such communication is required by the user equipment.

In one embodiment, the switching comprises autonomously releasing a radio resource control connection prior to the device-to-device communication.

In one embodiment, when the determining logic determines that the cell is incapable of operating with simultaneous device-to-device and cellular communication and the user equipment is capable of operating with simultaneous device-to-device and cellular communication due to carrier aggregation capability, the device-to-device communication scheme comprises allocating logic supporting carrier aggregation communication for device-to-device communication.

In one embodiment, the logic comprises at least one of transmission logic and reception logic supporting device-to-device communication using one of a plurality of carriers.

In one embodiment, the user equipment comprises providing logic operable to provide an indication of the logic allocated for device-to-device communication to a network node of the wireless telecommunications network.

In one embodiment, the providing logic operable is operable to provide the indication during an attach of the user equipment.

In one embodiment, when the determining logic determines that the cell is capable of operating with simultaneous device-to-device and cellular communication and the user equipment is incapable of operating with simultaneous device-to-device and cellular communication, the device-to-device communication scheme comprises switching between cellular communication and device-to-device communication using time division multiplexing.

In one embodiment, the time division multiplexing allocates at least one subframe for device-to-device communication.

In one embodiment, the time division multiplexing allocates the at least one subframe for device-to-device communication on at least one of a frequency carrier used for the cellular communication and a frequency carrier dedicated to device-to-device communication.

In one embodiment, when the determining logic determines that the cell is capable of operating with simultaneous device-to-device and cellular communication and the user equipment is incapable of operating with simultaneous device-to-device and cellular communication, the device-to-device communication scheme comprises performing device-to-device communication on a frequency carrier dedicated to device-to-device communication by the wireless telecommunications network.

In one embodiment, the performing device-to-device communication on the frequency carrier dedicated to device-to-device communication by the wireless telecommunications network occurs in response to at least one of a handover of the user equipment to the frequency carrier dedicated to device-to-device communication, a release of a radio resource control connection and a release of a carrier for a carrier aggregation capable user equipment.

In one embodiment, the user equipment comprises providing logic operable to provide an indication to the wireless telecommunications network that the user equipment is to perform device-to-device communication.

In one embodiment, the indication is encoded using at least one of a specified RACH preamble, medium access control control element, radio resource control connection request information element, radio resource control connection complete information element and an interest indication.

In one embodiment, the indication indicates at least one of a frequency carrier for device-to-device communication, a device-to-device group of interest and whether the device-to-device communication comprises at least one of transmission and reception.

According to a third aspect, there is provided a network node method of supporting device-to-device communication within a wireless telecommunications network, comprising: determining a device-to-device communication capability of a user equipment; and responsive to the determining, selecting a device-to-device communication scheme based on a capability of a cell supporting the user equipment to operate with simultaneous device-to-device and cellular communication.

In one embodiment, when it is determined that the cell is incapable of operating with simultaneous device-to-device and cellular communication, the device-to-device communication scheme comprises switching to device-to-device communication when such communication is required by the user equipment.

In one embodiment, the switching comprises releasing a radio resource control connection prior to the device-to-device communication.

In one embodiment, the method comprises receiving an indication of logic allocated in the user equipment for device-to-device communication.

In one embodiment, the receiving occurs during an attach of the user equipment.

In one embodiment, when it is determined that the cell is capable of operating with simultaneous device-to-device and cellular communication and the user equipment is incapable of operating with simultaneous device-to-device and cellular communication, the device-to-device communication scheme comprises switching between cellular communication and device-to-device communication using time division multiplexing.

In one embodiment, the time division multiplexing allocates at least one subframe for device-to-device communication.

In one embodiment, the time division multiplexing allocates the at least one subframe for device-to-device communication on at least one of a frequency carrier used for the cellular communication and a frequency carrier dedicated to device-to-device communication.

In one embodiment, when it is determined that the cell is capable of operating with simultaneous device-to-device and cellular communication and the user equipment is incapable of operating with simultaneous device-to-device and cellular communication, the device-to-device communication scheme comprises performing device-to-device communication on a frequency carrier dedicated to device-to-device communication by the wireless telecommunications network.

In one embodiment, the performing device-to-device communication on the frequency carrier dedicated to device-to-device communication by the wireless telecommunications network occurs in response to at least one of a handover of the user equipment to the frequency carrier dedicated to device-to-device communication, a release of a radio resource control connection and a release of a carrier for a carrier aggregation capable user equipment.

In one embodiment, the method comprises receiving an indication from the user equipment that the user equipment is to perform device-to-device communication.

In one embodiment, the indication is encoded using at least one of a specified RACH preamble, medium access control control element, radio resource control connection request information element, radio resource control connection complete information element and an interest indication.

In one embodiment, the indication indicates at least one of a frequency carrier for device-to-device communication, a device-to-device group of interest and whether the device-to-device communication comprises at least one of transmission and reception..

According to a fourth aspect, there is provided a network node operable to support device-to-device communication within a wireless telecommunications network, comprising: determining logic operable to determine a device-to-device communication capability of a user equipment; and selection logic, responsive to the determining logic, to select a device-to-device communication scheme based on a capability of a cell supporting the user equipment to operate with simultaneous device-to-device and cellular communication.

In one embodiment, when the determining logic determines that the cell is incapable of operating with simultaneous device-to-device and cellular communication, the selection logic is operable to select a device-to-device communication scheme which switches to device-to-device communication when such communication is required by the user equipment.

In one embodiment, the selection logic switches to device-to-device communication by releasing a radio resource control connection prior to the device-to-device communication.

In one embodiment, the network node comprises reception logic operable to receive an indication of logic allocated in the user equipment for device-to-device communication.

In one embodiment, the reception logic receives during an attach of the user equipment.

In one embodiment, when the determining logic determines that the cell is capable of operating with simultaneous device-to-device and cellular communication and the user equipment is incapable of operating with simultaneous device-to-device and cellular communication, the selection logic is operable to select a device-to-device communication scheme which switches between cellular communication and device-to-device communication using time division multiplexing.

In one embodiment, the time division multiplexing allocates at least one subframe for device-to-device communication.

In one embodiment, the time division multiplexing allocates the at least one subframe for device-to-device communication on at least one of a frequency carrier used for the cellular communication and a frequency carrier dedicated to device-to-device communication.

In one embodiment, when the determining logic determines that the cell is capable of operating with simultaneous device-to-device and cellular communication and the user equipment is incapable of operating with simultaneous device-to-device and cellular communication, the selection logic is operable to select a device-to-device communication scheme which performs device-to-device communication on a frequency carrier dedicated to device-to-device communication by the wireless telecommunications network.

In one embodiment, the selection logic is operable to select a device-to-device communication scheme which performs device-to-device communication on the frequency carrier dedicated to device-to-device communication by the wireless telecommunications network in response to at least one of a handover of the user equipment to the frequency carrier dedicated to device-to-device communication, a release of a radio resource control connection and a release of a carrier for a carrier aggregation capable user equipment.

In one embodiment, the network node comprises reception logic operable to receive an indication from the user equipment that the user equipment is to perform device-to-device communication.

In one embodiment, the indication is encoded using at least one of a specified RACH preamble, medium access control control element, radio resource control connection request information element, radio resource control connection complete information element and an interest indication.

In one embodiment, the indication indicates at least one of a frequency carrier for device-to-device communication, a device-to-device group of interest and whether the device-to-device communication comprises at least one of transmission and reception..

According to a fifth aspect, there is provided a computer program product operable, when executed on a computer, to perform the method of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates example processing by a user equipment and a network node according to one embodiment; and
Figure 2 illustrates example signalling between the user equipment and the network node according to one embodiment.

### DESCRIPTION OF THE EMBODIMENTS

Before discussing the embodiments in any more detail, first an overview will be provided. Embodiments recognize that the capability, ability or functionality provided by both user equipment and the network providing the cell which provides coverage to the user equipment may vary. Accordingly, embodiments establish the functionality of the cell and/ or user equipment to perform simultaneous device-to-device communication and cellular communication and select a device-to-device communication scheme which is compatible with those functionalities. Typically, this can result in the user equipment switching between device-to-device communication and cellular communication itself, performing sub-frame time division multiplexing to carry the device-to-device and cellular traffic using the same radio link and/ or allocating resources that would otherwise be used for carrier aggregation to support device-to-device communication.

Embodiments provide methods of handling simultaneous device-to-device and cellular operation, where, for example, a public safety body operates its own dedicated spectrum for device-to-device communication or shares frequency(ies) for device-to-device with cellular operation, taking into consideration of the network and user equipment cellular/device-to-device capability. Example operation is explained in more detail below for different scenarios of user equipment and network capabilities and deployments. The scenarios considered are that of a legacy network, a network capable of device-to-device operation, user equipment with a dedicated and a time-shared radio frequency interface, and deployments.

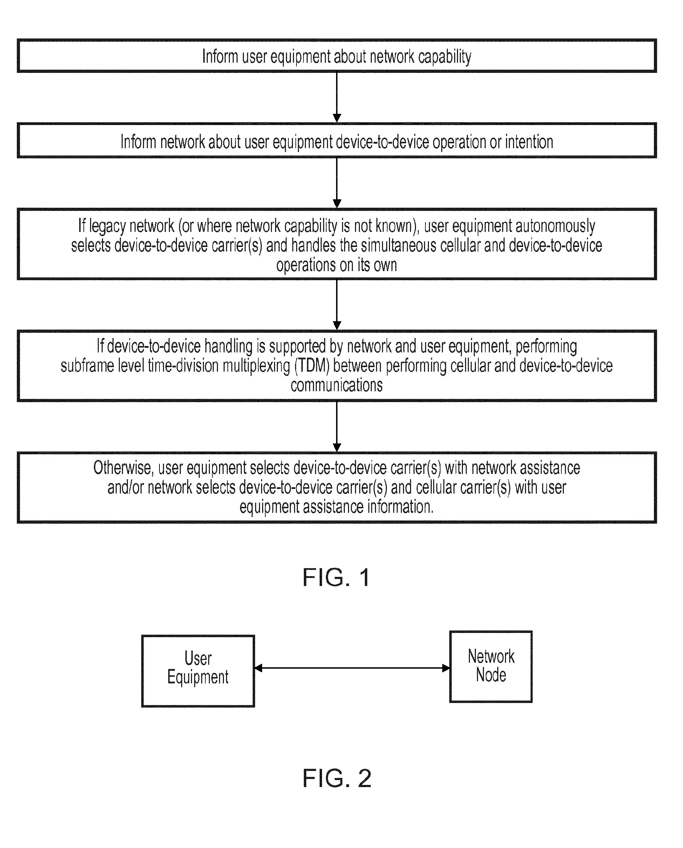

As illustrated in Figures 1 and 2, generally, embodiments operate by : 1) Informing the user equipment (UE) about network capability and the user equipment informing the network about its device-to-device operation or intention; 2) For legacy networks (or where network capability is not known), the user equipment autonomously selects device-to-device carrier(s) and handles the simultaneous cellular and device-to-device operations on its own; 3) If device-to-device handling is supported by the network and the user equipment, performing subframe level time-division multiplexing (TDM) between performing cellular and device-to-device communications (i.e. perform cellular communication during some subframes and device-to-device communications during other subframes); 4) In the remaining cases (i.e. if the network can't perform subframe level TDM), the user equipment selects device-to-device carrier(s) with network assistance and/ or the network selects device-to-device carrier(s) and cellular carrier(s) with user equipment assistance information.

### Summary of operation

(i) If a base station providing a cell supporting a user equipment cannot handle device-to-device operation (e.g. a legacy cell), then the user equipment should detect this based on information contained the in system information block (SIB) or in dedicated signalling. A public safety operator has dedicated frequency(ies) for device-to-device operation.
   a. If the user equipment has dedicated device-to-device radio frequency (RF) interfaces (such as a RF transmit/receive chain) capable of simultaneous device-to-device and cellular communication, then the user equipment can continue the cellular operation as normal.
   b. If the user equipment is not capable of simultaneous cellular and device-to-device operation, then the user equipment is not allowed to perform the cellular operation because the network cannot perform TDM between cellular and device-to-device transmissions. The user equipment can autonomously switch its RF interface to device-to-device communication when it needs to perform a device-to-device operation. If the user equipment was radio resource control (RRC) connected at the start of device-to-device operation, then it needs to first release the RRC connection either autonomously or by explicit release request.
   c. If the user equipment is carrier aggregation (CA) capable, then it can dedicate one RF interface to device-to-device communication (uplink (UL) for device-to-device transmission, downlink (DL) or UL for device-to-device reception) and indicate the corresponding reduction in RF cellular capability to the network. This change of user equipment capability can be done at the time of Attach - either at power-on or by a forced detach/ attach procedure.
(ii) If the base station providing the cell supporting the user equipment can handle simultaneous cellular operation and device-to-device operation (i.e. an upgraded cell), then the user equipment will be able to read from the SIB that the cell can handle simultaneous operation.
   a. If the user equipment has dedicated device-to-device RF interface(s) capable of simultaneous device-to-device and cellular operation on dedicated public safety carrier(s), then the user equipment can continue with the cellular operation as normal.
   b. If the user equipment does not have dedicated device-to-device RF interface(s) capable of simultaneous cellular and device-to-device operation, then the RF interface(s) between device-to-device and cellular operation should be time shared. Assuming the device-to-device operation is time synchronised with the cellular operation, then network should avoid overlapping in time at a subframe level the cellular operation with the device-to-device operation for the user equipment. This allows the user equipment to perform device-to-device operation in the corresponding subframes either on the same frequency or on a dedicated device-to-device frequency (by RF interface re-tuning to the device-to-device carrier frequency in the corresponding device-to-device subframes).
   c. If the TDM-based approach is not possible, then the network has to allow the device-to-device operation on the device-to-device frequency (dedicated or shared) by not configuring secondary serving cells (Scells) that can result in a collision of the device-to-device and cellular operation in the user equipment, or by handing over the user equipment to the device-to-device carrier or by releasing the RRC connection.

For each case b and c above, the user equipment informs the network about the start of device-to-device operations; there are various techniques by which the user equipment can inform the base station (eNB) that it is performing device-to-device operation by encoding an indication in any of the following:
i. a random access channel (RACH) preamble transmission (using a preamble split);
ii. a medium access control (MAC) control element (CE);
iii. RRC Connection Request (using an information element (IE) or establishment cause);
iv. RRC Connection Complete (introducing a new IE or signalling);
v. An explicit new message such as Interest indication.

The information carried could be either the frequency for device-to-device operation or the device-to-device group of interest and as well as whether device-to-device operation is for reception only, transmission only or both. The latter allows different handling for device-to-device reception and transmission (e.g. TDM between UL cellular and device-to-device transmission while using DL CA for the device-to-device reception and DL primary serving cell (Pcell) for DL cellular, etc.).

The behaviour mentioned above is applicable for user equipment in RRC Idle at the start of device-to-device operation; the user equipment will need to go into RRC connected to provide this information to the network. As another implementation choice, user equipment in RRC Idle could monitor paging while in device-to-device operation and only inform the network when the user equipment goes into RRC connected. User equipment behaviours mentioned in (i) above are also possible here.

### Scenario 1: Public safety operator has dedicated frequency for device-to-device operation

In this scenario, the public safety operator pre-provisions the user equipment with the frequency(ies) for device-to-device operation. The user equipment is also a normal user equipment, being able to operate in cellular mode in some visited Public Land Mobile Networks (VPLMNs) which do not support device-to-device in their carriers but will indicate whether they can handle user equipment capability limitation due to device-to-device. In such a case where the cellular operation is running in parallel with device-to-device operation, priority should be given to device-to-device operation. A cell indicates either in the SIB or in dedicated signalling that it can handle simultaneous cellular and device-to-device operation at the same time, even if none of its frequencies support device-to-device operation. The user equipment prioritises device-to-device operation over cellular operation if simultaneous operation is not possible.
(i) If the base station providing the cell supporting the user equipment cannot handle simultaneous cellular operation and device-to-device operation (e.g. legacy cell):
   (A) If the user equipment is in Idle mode with device-to-device operation:
      (1) The user equipment will be able to read from the SIB that the cell cannot handle simultaneous operation;
      (2) If the user equipment needs to perform cellular operation (i.e. the user equipment is transitioning to the RRC Connected state) and the user equipment is non-CA capable, then according to Table 2 below:
         a. If the user equipment has no dedicated transmitter for device-to-device operation, then the user equipment is not allowed to perform the cellular operation because the network needs to know to perform TDM between cellular and device-to-device transmissions;
         b. If the user equipment has a dedicated transmitter for device-to-device operation, then the user equipment is allowed to perform the cellular operation.
      (3) If the user equipment needs to perform cellular operation and the user equipment is DL CA capable only, then according to Table 2 below:
         a. If the user equipment has no dedicated transmitter for device-to-device operation, then the user equipment is not allowed to perform the cellular operation because the network needs to know to perform TDM between cellular and device-to-device transmissions;
         b. If the user equipment has a dedicated transmitter for device-to-device operation, then the user equipment needs to manipulate the user equipment DL CA capability to ensure that the network does not set up DL CA when the device-to-device operation is ongoing. Such manipulation needs to be handled with care to ensure no misalignment between the network and the user equipment.
      (4) If the user equipment needs to perform cellular operation and the user equipment is UL CA capable (i.e. DL is CA capable since number of DL CA >= number of UL CA), then according to Table 2 below:
         a. Since there is no dedicated user equipment transmitter for device-to-device communication, then the network needs to know that the UL transmitter for UL CA is used instead for device-to-device transmission. Since the cell is not device-to-device capable, the user equipment again needs to manipulate the user equipment UL CA capability to ensure that the network does not setup UL CA when the device-to-device operation is ongoing (this is similar to (3b) above);
         b. If the user equipment has a dedicated transmitter for device-to-device operation, then it is like (3b) above for the DL CA. Unless the dedicated transmitter for device-to-device operation affects the UL CA capability, manipulation of the UL CA capability like in (4a) above is also required here.
   (B) If the user equipment is in RRC Connected with cellular operation:
      (1) The user equipment will be able to read from the SIB that the cell cannot handle simultaneous operation (prior RRC Connection (re)establishment and after handover);
      (2) If the user equipment needs to perform device-to-device operation and the user equipment is non-CA capable, then according to Table 2 below:
         a. If the user equipment has no dedicated transmitter for device-to-device operation, then the user equipment has to release the RRC Connection for the cellular operation;
         b. If the user equipment has a dedicated transmitter for device-to-device operation, then the user equipment performs device-to-device operation based on the preconfiguration.
      (3) If the user equipment needs to perform cellular operations and the user equipment is DL CA capable only, then according to Table 2 below:
         a. If the user equipment has no dedicated transmitter for device-to-device operation, then the user equipment has to release the RRC Connection for the cellular operation;
         b. If the user equipment has a dedicated transmitter for device-to-device operation, then the user equipment needs to manipulate the user equipment DL CA capability to ensure that the network does not set up DL CA when the device-to-device operation is ongoing. Such manipulation needs to be handled with care to ensure no misalignment between the network and the user equipment.
      (4) If the user equipment needs to perform cellular operations and the user equipment is UL CA capable (i.e. DL is CA capable since number of DL CA >= number of UL CA), then according to Table 2 below:
         a. Since there is no dedicated transmitter for device-to-device communication, the network needs to know that the UL transmitter for UL CA is used instead for device-to-device transmission. Since the cell is not device-to-device capable, the user equipment again needs to manipulate the user equipment UL CA capability to ensure that the network does not setup UL CA when device-to-device operation is ongoing (this is similar to (3b) above);
         b. If the user equipment has a dedicated transmitter for device-to-device operation, then it is like (3b) for the DL CA. Unless the dedicated transmitter for device-to-device operation affects the UL CA capability, manipulation of the UL CA capability like in (4a) is also required here.
(ii) If the base station providing the cell supporting the user equipment can handle simultaneous cellular operation and device-to-device operation (i.e. Upgraded cell);
   (A) If the user equipment user equipment is in Idle mode with device-to-device operation:
      (1) The user equipment will be able to read from the SIB that the cell can handle simultaneous operation.
      (2) If the user equipment needs to perform cellular operation and the user equipment is non-CA capable, then according to Table 2 below:
         a. If the user equipment has no dedicated transmitter for device-to-device operation, then the network needs to know that the user equipment is performing device-to-device communication and the UL radio resources (transmit (TX) & receive (RX) pools) so that it can avoid overlapping in time with the device-to-device operation. Assuming the device-to-device operation is time synchronised with the cellular operation, there are various way where the user equipment can inform the base station that it is performing device-to-device operation as mentioned above:
            i. Preamble transmission (using preamble split);
            ii. RRC Connection Request (using an IE or establishment cause);
            iii. RRC Connection Complete (introducing a new IE or signalling);
            iv. An explicit new message.
            The TX & RX pools can be provided via operation, administration and maintenance (OAM) signalling in the case of (i), (ii) above and part of the signalling in the case of (iii) and (iv) above. Upon receiving this information, the base station scheduler takes it into account when scheduling on the UL. With a dedicated receiver for device-to-device operation, there is no further restriction on the simultaneous reception of device-to-device and cellular operation. Alternatively, the user equipment shall not setup the cellular connection.
         b. If the user equipment has a dedicated transmitter and receiver for device-to-device operation, there is no need for the user equipment to inform the base station about the running device-to-device operation.
      (3) If the user equipment needs to perform cellular operation and the user equipment is DL CA capable only, then according to Table 2 below:
         a. If the user equipment has no dedicated transmitter for device-to-device operation, then the network needs to be informed in a similar way to (ii)(2)a above. Since the dedicated receiver for device-to-device operation may degrade the CA capability, the network should not setup DL CA (i.e. configured Scell) when the device-to-device operation is ongoing. Once the device-to-device operation ceases, the user equipment needs to use an explicit new message/ signal to inform the network so that the network can configure DL CA;
         b. If the user equipment has a dedicated transmitter for device-to-device operation, then there is no need to inform the base station about the device-to-device transmission. However, the network should still know degradation to the DL CA capability. Again, this can be done in a similar way to (ii)(2)a above for the informing of device-to-device operation.
      (4) If the user equipment needs to perform cellular operation and the user equipment is UL CA capable (i.e. DL is CA capable since number of DL CA >= number of UL CA), then according to Table 2 below:
         a. If the user equipment has no dedicated transmitter for device-to-device operation (i.e. share with UL CA capability), then the network needs to be informed in a similar way to (ii)(2)a above so that the network can perform TDM on the Scell or the Pcell or not to setup the SCell. Since the dedicated receiver for device-to-device operation may degrade the DL CA capability, the network should not setup DL CA (i.e. configured Scell) when the device-to-device operation is ongoing. Once the device-to-device operation ceases, the user equipment needs to use an explicit new message/ signal to inform the network so that the network can configure DL CA;
         b. If the user equipment has a dedicated transmitter for device-to-device operation and the dedicated transmitter degrades the UL CA capability, then the network needs to be informed as well so that it will not setup the Scell while performing device-to-device operation same as the DL CA.
   (B) If the user equipment is in Connected mode with cellular operation:
      (1) The user equipment will be able to read from the SIB that the cell can handle simultaneous operation
      (2) If the user equipment needs to perform cellular operation and the user equipment is non-CA capable, then according to Table 2 below:
         a. If the user equipment has no dedicated transmitter for device-to-device operation, then the network needs to know that the user equipment is performing device-to-device communication and the UL radio resources (TX & RX pools) so that it can avoid overlapping in time with the device-to-device operation. Assuming the device-to-device operation is time synchronised with the cellular operation, the user equipment can inform the base station via an explicit new message, as mentioned above; The TX & RX pools can be provided via OAM or as part of the signalling. Upon receiving this information, the base station scheduler takes it into account when scheduling on the UL. With a dedicated receiver for device-to-device operation, there is no further restriction on the simultaneous reception of device-to-device and cellular operation. Alternatively, the UE shall not setup the cellular connection.
         b. If the user equipment has a dedicated transmitter and receiver for device-to-device operation, then there is no need for the user equipment to inform the base station about the running device-to-device operation.
      (3) If the user equipment needs to perform cellular operation and the user equipment is DL CA capable only, then according to Table 2 below:
         a. If the user equipment has no dedicated transmitter for device-to-device operation, then the network needs to be informed in a similar manner to (ii)(2)a above. Since the dedicated receiver for device-to-device operation may degrade the CA capability, the network should not setup DL CA (i.e. configured Scell) when the device-to-device operation is ongoing. Once the device-to-device operation ceases, the user equipment needs to use an explicit new message/ signal to inform the network so that the network can configure DL CA.
         b. If the user equipment has a dedicated transmitter for device-to-device operation, then there is no need to inform the base station about the device-to-device transmission. However, the network should still know about the degradation to the DL CA capability. Again, this can be done in a similar manner to (ii)(2)a above for the informing of device-to-device operation.
      (4) If the user equipment needs to perform cellular operation and the user equipment is UL CA capable (i.e. DL is CA capable since number of DL CA >= number of UL CA), then according to Table 2 below:
         a. If the user equipment has no dedicated transmitter for device-to-device operation (i.e. share with UL CA capability), then the network needs to be informed in a similar manner to (ii)(2)a above so that the network can perform TDM on the Scell or the Pcell or not to setup the SCell. Since the dedicated receiver for device-to-device operation may degrade the DL CA capability, the network should not setup DL CA (i.e. configured Scell) when the device-to-device operation is ongoing. Once the device-to-device operation ceases, the user equipment needs to use an explicit new message/ signal to inform the network so that the network can configure DL CA, as mentioned above.
         b. If the user equipment has a dedicated transmitter for device-to-device operation and the dedicated transmitter degrades the UL CA capability, then the network needs to be informed as well so that it will not setup the Scell while performing device-to-device operation, in a similar manner to the DL CA.

### Scenario 2: PS operator shares frequency(ies) for device-to-device with cellular op er ation

Example 1: The user equipment is interested in device-to-device reception in Idle Mode:
1. The base station providing the cell supporting the user equipment indicates in the SIB one or more device-to-device frequencies and/or its associated group or groups;
2. The user equipment is interested in receiving device-to-device of a group or from a device-to-device frequency;
3. The user equipment prioritise the device-to-device frequency (and associated with a group) for cell reselection;
4. Once the user equipment camps on the device-to-device frequency, it can read the SIB to find out the device-to-device reception configuration of the cell and use its dedicated receiver to monitor for device-to-device transmission.

Example 2: The user equipment is interested in device-to-device reception in Connected Mode but is on cell not supporting device-to-device reception/operation:
1. The base station providing the cell supporting the user equipment indicates in the SIB or via dedicated signalling one or more device-to-device frequencies and/ or it associated group or groups. The cell does not support device-to-device reception;
2. The user equipment is interested in receiving device-to-device of a group or from a device-to-device frequency;
3. The user equipment indicates a device-to-device Reception Interest Indication to the base station containing the group ID or device-to-device frequency;
4. For non-CA capable user equipment, the network may setup additional handover measurement to measure the device-to-device configuration message frequency and may decide to use handover or RRC Connection release with redirection to move the user equipment to the interested frequency either blindly or using the measurement report related to the measurement of the device-to-device frequency;
5 For CA capable user equipment (and the dedicated device-to-device receiver degrades the DL CA capability), the network releases the Scell (if setup)/refrains from setting up the Scell and provides the received device-to-device pool in dedicated signalling (e.g. RRC Connection Reconfiguration) to the user equipment.

Example 3: The user equipment is interested in device-to-device transmission but is on cell not supporting device-to-device transmission:
1. The base station providing the cell supporting the user equipment indicates in the SIB or via dedicated signalling one or more device-to-device frequencies and/or it associated group or groups. The cell does not support device-to-device reception;
2. The user equipment interested in device-to-device transmission to a group or in a device-to-device frequency;
3. The user equipment indicates a device-to-device Transmission Interest Indication to the base station containing the group ID or device-to-device frequency;
4. For non-CA capable user equipment, the network may use the indication to setup additional handover measurement to measure the frequency and may decide to use handover or RRC Connection release with redirection to move the user equipment to the frequency either blindly or using the measurement report;
5. For UL CA capable user equipment (i.e. the Scell may support device-to-device transmission) and the device-to-device transmission is shared with UL CC (i.e. RF chain is shared):
- If the SCell is setup, then the network has to perform TDM on the Scell with device-to-device transmission for both Mode 1 and 2 transmission;
- If the SCell is not setup, then the network just has to provide the TX pool in the case of Mode 2. For Mode 2, the network needs to provide device-to-device transmission configuration (e.g. device-to-device buffer status report configuration) on a secondary carrier.

**Table 2**

| Index | UE State of device-to-device operation | UE CA capability | Dedicated transmitter for device-to-device | Legacy cell | UE behaviour when simultaneous operation is required |
|---|---|---|---|---|---|
| (i)(A)(2)a | Idle mode | No | No | Yes | Not setup the cellular connection |
| (i)(A)(2)b | | No | Yes | Yes | Setup the cellular connection |
| (i)(A)(3)a | | Yes, DL only | No | Yes | Not setup the cellular connection |
| (i)(A)(3)b | | Yes, DL only | Yes | Yes | Alt# 1 Not setup the cellular connection Alt#2 Manipulate the UE DL CA capability (to reflect on the degradation of DL CA) |
| (i)(A)(4)a | | Yes, UL & DL | No | Yes | Alt#1 Not setup the cellular connection Alt#2 Manipulate the UE UL/ DL CA capability (to reflect on the degradation of UL CA) |
| (i)(A)(4)b | | Yes, UL & DL | Yes | Yes | Alt# 1 No setup the cellular connection Alt#2 Manipulate the UE UL/ DL CA capability (to reflect on the degradation of UL CA) |
| (ii)(A)(2)a | | No | No | No | UE informs eNB that it wants to perform device-to-device via either preamble transmissions, RRC Connection Request, RRC Connection Setup Complete or a new message/signalled in existing message |
| (ii)(A)(2)b | | No | Yes | No | There is no need to inform the network with dedicated transmitter and receiver for device-to-device. |
| (ii)(A)(3)a | | Yes, DL only | No | No | Same as (ii)(A)(2)a. In the DL because of the dedicated receiver resulting in degradation to DL CA capability, the network may not be able to setup DL CA to the DL CA capability because of UE performing device-to-device reception. |
| (ii)(A)(3)b | | Yes, DL only | Yes | No | No further action for device-to-device transmission. In the DL because of the dedicated receiver resulting in degradation to DL CA capability, the network may not be able to setup DL CA to the DL CA capability because of UE performing device-to-device reception. |
| (ii)(A)(4)a | | Yes, UL & DL | No | No | Same as (ii)(A)3a so for the UL the network can perform TDM on Pcell or Scell or not set up the Scell and for the DL, the network has to take into consideration of the degradation in the DL CA capability. |
| (ii)(A)(4)b | | Yes, UL & DL | Yes | No | In both the DL and UL if the dedicated transmitter and receiver results in degradation of the CA capability, the network may not be able to setup UL/ DL CA to the UL/DL CA capability because of UE performing device-to-device reception/ transmission |
| (i)(B)(2)a | Connected mode | No | No | Yes | Release the cellular connection to perform device-to-device transmission |
| (i)(B)(2)b | | No | Yes | Yes | No further action required; no need to inform the network |
| (i)(B)(3)a | | Yes, DL only | No | Yes | Release the cellular connection to perform device-to-device transmission |
| (i)(B)(3)b | | Yes, DL only | Yes | Yes | No problem on device-to-device transmission since there is dedicated transmitter for device-to-device. For DL, the UE needs to manipulate the DL CA capability to reflect on the degradation due to the dedicated receiver requirement for device-to-device reception |
| (i)(B)(4)a | | Yes, UL & DL | No | Yes | Release the cellular connection to perform device-to-device transmission |
| (i)(B)(4)b | | Yes, UL & DL | Yes | Yes | For UL/DL, the UE needs to manipulate the UL and DL CA capability to reflect on the degradation due to the dedicated receiver requirement for device-to-device reception and/or transmission |
| (ii)(B)(2)a | | No | No | No | Same as (ii)(A)(2)a |
| (ii)(B)(2)b | | No | Yes | No | Same as (ii)(A)(2)b |
| (ii)(B)(3)a | | Yes, DL only | No | No | Same as (ii)(A)(3)a |
| (ii)(B)(3)b | | Yes, DL only | Yes | No | Same as (ii)(A)(3)b |
| (ii)(B)(4)a | | Yes, UL & DL | No | No | Same as (ii)(A)(4)a |
| (ii)(B)(4)b | | Yes, UL & DL | Yes | No | Same as (ii)(A)(4)b |

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment method of supporting device-to-device communication within a wireless telecommunications network, comprising:
determining a capability of a cell supporting said user equipment to operate with simultaneous device-to-device and cellular communication; and
responsive to said determining, selecting a device-to-device communication scheme based on a device-to-device communication capability of said user equipment.

2. The method of claim 1, wherein when it is determined that said cell is incapable of operating with simultaneous device-to-device and cellular communication, said device-to-device communication scheme comprises switching to device-to-device communication when such communication is required by said user equipment.

3. The method of claim 2, wherein said switching comprises autonomously releasing a radio resource control connection prior to said device-to-device communication.

4. The method of any preceding claim, wherein when it is determined that said cell is incapable of operating with simultaneous device-to-device and cellular communication and said user equipment is capable of operating with simultaneous device-to-device and cellular communication due to carrier aggregation capability, said device-to-device communication scheme comprises allocating logic supporting carrier aggregation communication for device-to-device communication.

5. The method of claim 4, wherein said logic comprises at least one of transmission logic and reception logic supporting device-to-device communication using one of a plurality of carriers.

6. The method of claim 4 or 5, comprising providing an indication of said logic allocated for device-to-device communication to a network node of said wireless telecommunications network.

7. The method of any preceding claim, wherein when it is determined that said cell is capable of operating with simultaneous device-to-device and cellular communication and said user equipment is incapable of operating with simultaneous device-to-device and cellular communication, said device-to-device communication scheme comprises switching between cellular communication and device-to-device communication using time division multiplexing.

8. The method of claim 7, wherein said time division multiplexing allocates said at least one subframe for device-to-device communication on at least one of a frequency carrier used for said cellular communication and a frequency carrier dedicated to device-to-device communication.

9. The method of any preceding claim, wherein when it is determined that said cell is capable of operating with simultaneous device-to-device and cellular communication and said user equipment is incapable of operating with simultaneous device-to-device and cellular communication, said device-to-device communication scheme comprises performing device-to-device communication on a frequency carrier dedicated to device-to-device communication by said wireless telecommunications network.

10. The method of claim 9, wherein said performing device-to-device communication on said frequency carrier dedicated to device-to-device communication by said wireless telecommunications network occurs in response to at least one of a handover of said user equipment to said frequency carrier dedicated to device-to-device communication, a release of a radio resource control connection and a release of a carrier for a carrier aggregation capable user equipment.

11. The method of any preceding claim, comprising providing an indication to said wireless telecommunications network that said user equipment is to perform device-to-device communication.

12. User equipment operable to support device-to-device communication within a wireless telecommunications network, comprising:
determining logic operable to determine a capability of a cell supporting said user equipment to operate with simultaneous device-to-device and cellular communication; and
selection logic operable, responsive to said determining logic, to select a device-to-device communication scheme based on a device-to-device communication capability of said user equipment.

13. A network node method of supporting device-to-device communication within a wireless telecommunications network, comprising:
determining a device-to-device communication capability of a user equipment; and
responsive to said determining, selecting a device-to-device communication scheme based on a capability of a cell supporting said user equipment to operate with simultaneous device-to-device and cellular communication.

14. A network node operable to support device-to-device communication within a wireless telecommunications network, comprising:
determining logic operable to determine a device-to-device communication capability of a user equipment; and
selection logic, responsive to said determining logic, to select a device-to-device communication scheme based on a capability of a cell supporting said user equipment to operate with simultaneous device-to-device and cellular communication.

15. A computer program product operable, when executed on a computer, to perform the method of any one of claims 1 to 11 and 13.
